# EUROPEAN PATENT SPECIFICATION

(11) **EP 2 133 882 B1**
(45) Date of publication and mention of the grant of the patent: **12.08.2015**
(21) Application number: 08158260.3
(22) Date of filing: 13.06.2008
(51) Int. Cl.: G11C 16/22, G06F 21/75, G06F 21/79, G11C 5/00, G11C 7/24

(54) **Non-volatile memory device and method for secure readout of protected data**
Nicht flüchtige Speichervorrichtung und Verfahren zum sicheren Auslesen geschützter Daten
Dispositif de mémoire non volatile et procédé de sécurisation de lecture de données protégées

(43) Date of publication of application: 16.12.2009
(73) Proprietor: EM Microelectronic-Marin SA, 2074 Marin (CH)
(72) Inventor: Plavec, Lubomir, 262 13 Necin (CZ); Prazan, Michal, 130 00 Praha 3 (CZ); Subrt, Ondrej, 500 06 Hradec Kralové 6 (CZ)
(74) Representative: Couillard, Yann Luc Raymond

(56) References cited:
- EP-A- 1 496 641
- WO-A-2004/102625
- US-A- 5 734 616
- US-A1- 2004 190 339
- US-A1- 2005 078 524
- US-B1- 7 379 325

## Description

The invention relates to a computer comprising a memory array and a readout circuit and to a method for secure readout of protected data from a non-volatile memory device.

Non-volatile memory devices are widely known for storing secret and non-secret data. Secret data is stored in many applications using passwords, keys and the like.

In conventional memory devices, the power consumption of the memory during reading a bit with the value 1 is slightly different from the power consumption during reading a bit with the value 0.

This results in the problem that upon reading the secure data, the measuring of the power consumption of the memory device can be used to obtain the secret data from the chip. This technique is called simple power analysis (SPA). If the power consumption is measured several times and average power consumption is calculated to suppress the random variations of the power consumption, the corresponding technique is called differential power analysis (DPA).

This type of attack is known since a long time and several proposals for preventing such attacks have been made. According to a first type of SPA/DPA protection, it has been proposed to try modifying a sense amplifying device of the non-volatile memory device such that it has the same power consumption during reading 0's and reading 1's. A second proposal consists in doubling the memory and to use two chips, such that every bit may be written and read twice. In the first memory device, the bit value itself is stored and in the second memory device, its inverse value is stored, such that always one bit with the value 1 and one bit with the value 0 are read at the same time. As a consequence, the power consumption of entire structure can be made roughly independent on the memory content being read.

In the above mentioned first type of SPA/DPA protection, it has turned out to be very difficult to provide hardware having the same power consumption during reading 0's and 1's, since the power consumption profile can change with temperature, supply voltage and other external influences. If two memory devices are used, the unavoidable tolerances may result in a possible point for a DPA attack. Moreover, doubling all of the bits in a memory causes a significant increase of the area of the memory block.

The patent application publication US 2005/0078524 on which the preamble of claim 1 is based discloses a non-volatile semiconductor memory device including a memory cell array and a plurality of sense amplifiers respectively connected to the plurality of bit lines (columns of the memory cell array). This arrangement allows simultaneously reading the bits of a word line in which data may have previously been written.

In the most common applications, the non-volatile memory device is used to store non-secret data together with secret data. The efforts for protecting the readout of non-secure data against SPA/DPA attacks are unnecessary and result in an ineffective use of resources.

It is the object of the invention to provide a non-volatile memory device enabling an effective prevention of SPA/DPA attacks while enabling an effective use of the resources.

The object is achieved in particular by a non-volatile memory device according to claim 1 and by a method for reading out protected data according to claim 4.

In contrast to very low consumption non-volatile memory devices wherein only one sense amplifier is normally used for sequentially amplifying the signals from the plurality of bits of a word line, the invention proposes to divide the word lines of at least a protected part of the memory device into two or more subsets of memory cells each being associated and connected to a respectively different sense amplifier, thus enabling a simultaneous readout from different subsets of memory cells of the word lines of at least the protected part of the memory device. On the one hand, a protected data may be read in a SPA/DPA-proof way provided that, according to the invention, this protected data is stored in a first part of a word line of the protected part of the memory device, i.e. in memory cells belonging to a first subset of memory cells of such a word line, and the inverse copy of the protected data is stored in a second part of this word line, i.e. in a second subset of memory cells of the same word line of the protected part of the memory device, said first and second parts being respectively associated to first and second sense amplifiers. On the other hand, non-protected data may be simultaneously read out from the different regions of a word line of the non-protected part of the memory device in order to accelerate the readout for the non-protected data. As a consequence the twofold readout structure may be effectively used also for non-protected data.

The SPA/DPA-proof readout is executed via a readout circuit configured to simultaneously read out one first data bit of a first part of any word line of the protected part of the memory device using a first sense amplifier and one second data bit from a second part of the same word line using a second sense amplifier, the first data bit being a protected data bit and the second data bit being an inverse copy of this first data bit.

Correspondingly, it is proposed that the different subsets of memory cells of the word lines of at least the protected part of the memory array include a first subset of protected memory cells for storing protected data bits and a second subset of protected memory cells for storing an inverse copy of the protected data bits. The protected memory cells may be constructed with reduced temperature sensitivity and/or reduced tolerances compared to non-protected memory cells. However, the protected and the non-protected data bits may also have the same semiconductor-structure.

A corresponding write circuit may be configured to always automatically write the bit value and its inverse. Alternatively, the write procedure may be implemented in the application software.

In a particularly simple embodiment of the invention, at least a part of the word lines is divided into half word lines, and the two half word lines of such word lines constitute the different subsets of memory cells of these word lines being connected to different sense amplifier devices. In general, the entire memory may be divided into two halves each being connected to one of the sense amplifier devices.

In a particular variant, it is proposed that the memory array comprises a protected part for storing protected data and an inverse copy of the protected data and further comprises a non-protected part for storing non-protected data. The size of the protected part of the memory may then be adapted such that ineffective use of the resources may be avoided.

In a particularly favourable embodiment of the invention, it is proposed that the readout circuit is configured to simultaneously read out at least two bits of the non-protected data from the non-protected part respectively using the at least two sense amplifiers in an accelerated reading mode. In a normal reading mode, the readout circuit may be configured to sequentially read out the bits of non-protected data from a third subset of the memory cells by employing the at least two sense amplifiers sequentially or alternatively.

Moreover, it is proposed that the non-volatile memory device further comprises a control device for adapting the size of the protected and non-protected parts of the memory device dependent on the amount of protected data to be stored. The control device may be a computer comprising the non-volatile memory device, wherein the computer runs a secure application using some type of protected data. The application may adapt the size of the protected and non-protected parts of the memory array depending in the size of the protected data.

In particular, the control device may adapt the size of the protected and non-protected parts of the memory device by allocating word lines of the memory array to the protected part or to the non-protected part of this memory array.

A further aspect of the invention relates to a method for secure readout of protected data from a non-volatile memory device comprising a memory array with multiple memory cells for storing bits of data. The memory cells are arranged in word lines and columns.

It is proposed that the method comprises simultaneously reading out data bits from different subsets of memory cells of at least a word line using at least two sense amplifier devices. The sense amplifier devices are respectively connected to these different subsets of memory cells.

According to the invention, it is proposed that the protected data bits and an inverse copy of these protected data bits are simultaneously read out from the different subsets of memory cells of the same word line, in order to avoid possible SPA/DPA attacks.

Further characterizing features of the invention and the advantages thereof will become apparent from the following description of a preferred embodiment of the invention. The embodiment and the figures illustrating the embodiment show a particular combination of the characterizing features of the invention. However, the invention is not limited to this particular combination and may be easily adapted by the skilled person to be applied in different environments or applications by considering further combinations or sub-combinations of the characterizing features.

Fig. 1 shows a computer system including a non-volatile memory device according to the invention; and

Fig. 2 is a schematic representation of a non-volatile memory device including two sense amplifier devices.

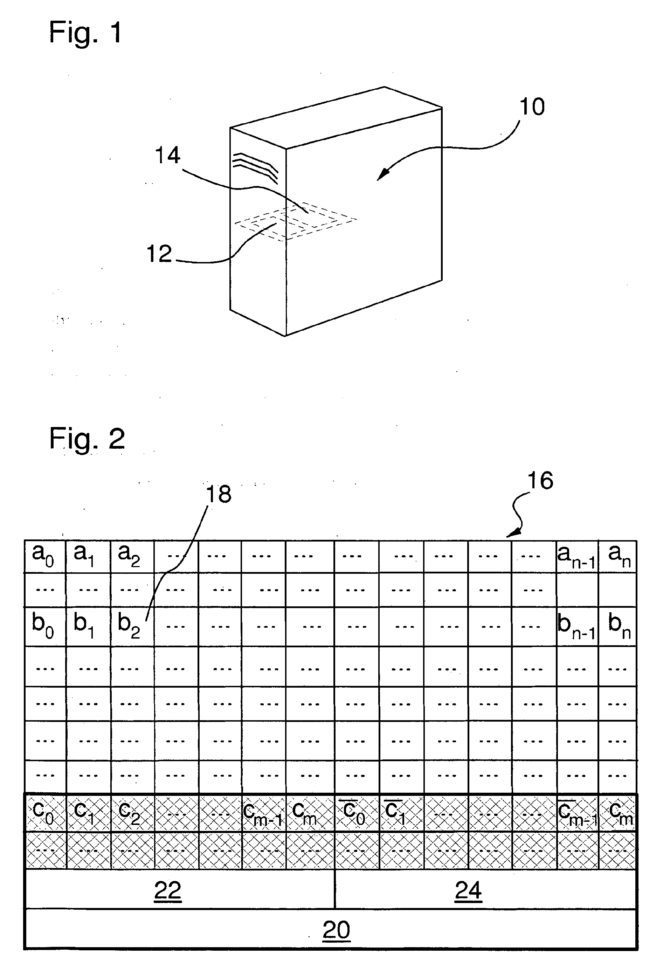

Fig. 1 is a schematic representation of a computer 10 including a non-volatile memory device in the form of a memory chip 12 and a central processing unit 14. The computer 10 runs a secure application employing protected data such as passwords.

The protected data is stored together with other data in the non-volatile memory device.

Fig. 2 is a schematic representation of the non-volatile memory device of Fig. 1. The non-volatile memory device comprises a memory array 16 with multiple memory cells 18 for storing bits of data. The memory cells are arranged in a rectangular matrix of word lines and columns. The non-volatile memory device further comprises a readout circuit 20 for reading out data from the memory array 16.

According to the invention, the non-volatile memory device comprises two sense amplifier devices 22, 24, namely a left hand sense amplifier device 22 and a right hand sense amplifier device 24. The sense amplifier devices 22, 24 have the well-known structure of regenerative sense amplifiers including pMOS isolation transistors and are used to amplify the memory device's sense bit-lines-swings between 100 mV and 300 mV to the full swing voltage of between 2 and 3 V.

In the embodiment shown in Fig. 2, the two sense amplifiers 22, 24 are connected to respectively different halves of the memory array 16, wherein each half includes half of the columns of the memory array 16, whereas the lines extend over both halves. Accordingly, each line is divided in two half lines, each half line being connected to one of the sense amplifiers 22, 24.

The readout circuit 20 is configured to simultaneously read out data bits from both halves of the same word line using the two sense amplifier devices 22, 24.

The readout circuit 20 is capable of performing the readout in three different operation modes. The first operation mode is a secure operation mode in which the readout circuit 20 reads out protected data bits from a first half of a word line and an inverse copy of the protected data bits from the second half of the protected word line using the two sense amplifiers 22, 24 simultaneously. In the secure mode, the readout circuit 20 always reads one bit with the value 1 and one bit with the value 0 simultaneously such that the total power consumption of the non-volatile memory device is independent of the bit-value of the protected data. As a consequence, SPA/DPA attacks are prevented.

The central processing unit 14 of the computer 10 of Fig. 1 is a control device which allocates a protected subset of the memory cells in the memory array 16 dependent on the amount of protected data to be stored. The control device may adapt the size of the protected subset depending on the secure application to be used. If more than one secure application is run, the respectively needed protected memory spaces may be added.

In a corresponding write mode for secure writing, the control device may simultaneously write the bit values of the protected data and the inverse thereof to the different halves of the protected word lines.

In the schematic representation of Fig. 2, the protected memory cells are highlighted with a hatching. It is illustrated that the protected line stores Boolean variables c₀ - cₘ in its left half word line being associated to the left sense amplifier 22, whereas an inverse copy of the Boolean variables *c̅ₒ* - *c̅ₘ* are stored in the right half of the protected line. The right half of the protected line is associated to the right sense amplifier 24. Of course, the sense amplifier devices 22 and 24 may consist of plural individual sense amplifiers.

In a normal reading mode, the readout circuit 20 sequentially reads out the bits of the non-protected data from the non-protected subset of the memory cells using the two sense amplifiers. In the non-protected subset of the memory cells, the values of the bits being stored in the left halves of the word lines are independent of the values of the bits stored in the right halves of the word lines. The values of the non-protected Boolean variables are a₀ - an, and b₀ - bₙ in Fig. 2, respectively. In the embodiment of Fig. 2, n = 2m+1.

The central processing unit 14 and the readout circuit 20 implement a method for secure readout of the protected data from the non-volatile memory device according to Fig. 2. In a secure readout mode, the data bits from the different subsets of a protected line are simultaneously read using the two sense amplifier devices 22, 24 connected to the different subsets of memory cells of the word line, respectively. The protected data are written to the protected memory cells such that the data on the right half of the protected word line are bitwise inverse copies of the protected data written on the left halves of the word line.

In a third accelerated reading mode, the readout circuit 20 reads out bits from the two halves of the non-protected word lines (e. g. the values aₖ and aₘ₊ₖ) using the two sense amplifier devices 22, 24 simultaneously and in parallel.

## Claims

1. Computer comprising:
- a memory array (16) with multiple memory cells (18) for storing bits of data, these memory cells being arranged in word lines and columns,
- writing means for writing data in the memory array, and
- a readout circuit (20) for reading out data from the memory array, this readout circuit comprising at least a first and a second sense amplifier devices (22, 24) which are respectively associated and connected to at least first and second different subsets of memory cells of each word line of at least a protected part of the memory array,
**characterised in that** said writing means are configured to store protected data in the first subset of memory cells of any word line of said protected part of the memory array and an inverse copy of these protected data in the second subset of memory cells of this word line, and **in that** said readout circuit (20) is configured to simultaneously read out any protected data bit of the first subset of memory cells of any word line of said protected part of the memory array using the first sense amplifier device (22) and the inverse copy of this any protected data bit from the second subset of memory cells of this word line using the second sense amplifier device (24).

2. Computer according to claim 1, **characterized in that** at least the word lines of said protected part of the memory array (16) are each divided into two half word lines, said two half word lines respectively constituting said first and second different subsets of memory cells of these word lines.

3. Computer according to claim 2, **characterized in that** the memory array (16) is divided into two halves which are respectively associated to the first and second sense amplifier devices (22, 24).

4. Method for secure readout of protected data from a non - volatile memory device comprising a memory array (16) with multiple memory cells (18) for storing bits of data, the memory cells (18) being arranged in word lines and columns and said memory array comprising at least a protected part for the protected data in which each word line comprises at least a first subset of memory cells and a second subset of memory cells, wherein the method comprises writing protected data in the first subset of memory cells of any word line of said protected part of the memory array and the inverse copy of these protected data in the second subset of memory cells of this word line, and wherein the method comprises simultaneously reading out any protected data bit from the first subset of memory cells of any word line of said protected part of the memory array and the inverse copy of this protected data bit located in the second subset of memory cells of this word line via respectively two sense amplifier devices (22, 24).

## Patentansprüche

1. Computer, der Folgendes umfasst:
- eine Speicheranordnung (16) mit mehreren Speicherzellen (18) zum Speichern von Datenbits, wobei diese Speicherzellen in Speicherwortzeilen und -spalten angeordnet sind,
- Schreibmittel, um Daten in die Speicheranordnung zu schreiben, und
- eine Ausleseschaltung (20), um Daten aus der Speicheranordnung auszulesen, wobei diese Ausleseschaltung wenigstens eine erste und eine zweite Leseverstärkervorrichtung (22, 24) umfasst, die jeweils zusammengehören und wenigstens mit einer ersten und einer hiervon verschiedenen zweiten Teilmenge von Speicherzellen jeder Speicherwortzeile des wenigstens einen geschützten Teils der Speicheranordnung verbunden sind,
**dadurch gekennzeichnet, dass** die Schreibmittel konfiguriert sind, geschützte Daten in der ersten Teilmenge der Speicherzellen einer Speicherwortzeile des geschützten Teils der Speicheranordnung und eine inverse Kopie dieser geschützten Daten in der zweiten Teilmenge der Speicherzellen dieser Speicherwortzeile zu speichern, und dadurch, dass die Ausleseschaltung (20) konfiguriert ist, unter Verwendung der ersten Leseverstärkervorrichtung (22) ein geschütztes Datenbit der ersten Teilmenge der Speicherzellen einer Speicherwortzeile des geschützten Teils der Speicheranordnung und unter Verwendung der zweiten Leseverstärkervorrichtung (24) die inverse Kopie dieses geschützten Datenbits von der zweiten Teilmenge der Speicherzellen dieser Speicherwortzeile gleichzeitig auszulesen.

2. Computer nach Anspruch 1, **dadurch gekennzeichnet, dass** zumindest die Speicherwortzeilen des geschützten Teils der Speicheranordnung (16) jeweils in zwei halbe Speicherwortzeilen aufgeteilt sind, wobei die zwei halben Speicherwortzeilen jeweils aus der ersten und der hiervon verschiedenen zweiten Teilmenge von Speicherzellen dieser Speicherwortzeilen bestehen.

3. Computer nach Anspruch 2, **dadurch gekennzeichnet, dass** die Speicheranordnung (16) in zwei Hälften untergeteilt ist, die jeweils zu der ersten und zweiten Leseverstärkervorrichtung (22, 24) gehören.

4. Verfahren zum sicheren Auslesen von geschützten Daten aus einer nichtflüchtigen Speichervorrichtung, die eine Speicheranordnung (16) mit mehreren Speicherzellen (18) zum Speichern von Datenbits umfasst, wobei die Speicherzellen (18) in Speicherwortzeilen und -spalten angeordnet sind und wobei die Speicheranordnung wenigstens einen geschützten Teil für die geschützten Daten umfasst, in dem jede Speicherwortzeile wenigstens eine erste Teilmenge von Speicherzellen und eine zweite Teilmenge von Speicherzellen umfasst, wobei das Verfahren das Schreiben geschützter Daten in die erste Teilmenge der Speicherzellen einer Speicherwortzeile des geschützten Teils der Speicheranordnung und der inversen Kopie dieser geschützten Daten in die zweite Teilmenge der Speicherzellen dieser Speicherwortzeile umfasst und wobei das Verfahren mittels zweier entsprechender Leseverstärkervorrichtungen (22, 24) das gleichzeitige Auslesen eines geschützten Datenbits aus der ersten Teilmenge der Speicherzellen einer Speicherwortzeile des geschützten Teils der Speicheranordnung und der inversen Kopie dieses geschützten Datenbits, die sich in der zweiten Teilmenge der Speicherzellen dieser Speicherwortzeile befindet, umfasst.

## Revendications

1. Ordinateur comprenant:
- une matrice mémoire (16) avec plusieurs cellules mémoire (18) pour stocker des bits de données, ces cellules mémoire étant disposées en lignes-mots et colonnes,
- un moyen d'écriture pour écrire des données dans la matrice mémoire, et
- un circuit de lecture (20) pour lire des données dans la matrice mémoire, ce circuit de lecture comprenant au moins un premier et un deuxième dispositifs amplificateurs de détection (22, 24) qui sont respectivement associés et reliés à au moins des premier et deuxième sous-ensembles différents de cellules mémoire de chaque ligne-mot d'au moins une partie protégée de la matrice mémoire, **caractérisé en ce que** ledit moyen d'écriture est configuré pour stocker des données protégées dans le premier sous-ensemble de cellules mémoire de n'importe quelle ligne-mot de ladite partie protégée de la matrice mémoire et une copie inverse de ces données protégées dans le deuxième sous-ensemble de cellules mémoire de cette n'importe quelle ligne-mot ; et **en ce que** ledit circuit de lecture (20) est configuré pour lire simultanément n'importe quel bit de données protégées dans le premier sous-ensemble de cellules mémoire de n'importe quelle ligne-mot de ladite partie protégée de la matrice mémoire à l'aide du premier dispositif amplificateur de détection (22) et la copie inverse de ce n'importe quel bit de données protégées dans le deuxième sous-ensemble de cellules mémoire de cette ligne-mot à l'aide du second dispositif amplificateur de détection (24).

2. Ordinateur selon la revendication 1, **caractérisé en ce qu'**au moins les lignes-mots de ladite partie protégée de la matrice mémoire (16) sont chacun divisés en deux demi-lignes, lesdites deux demi-lignes constituant respectivement lesdits premier et deuxième sous-ensembles différents de cellules mémoire de ces lignes-mots.

3. Ordinateur selon la revendication 2, **caractérisé en ce que** la matrice mémoire (16) est divisée en deux moitiés qui sont respectivement associées aux premier et second dispositifs amplificateurs de détection (22, 24).

4. Procédé pour la lecture sécurisée de données protégées d'une mémoire non volatile comprenant une matrice mémoire (16) avec une pluralité de cellules mémoire (18) pour stocker des bits de données, les cellules mémoire (18) étant disposées en lignes-mots et colonnes et ladite matrice mémoire comprenant au moins une partie protégée pour les données protégées dans laquelle chaque ligne-mot comprend au moins un premier sous-ensemble de cellules mémoire et un second sous-ensemble de cellules mémoire, le procédé comprenant l'écriture de données protégées dans le premier sous-ensemble de cellules mémoire de n'importe quelle ligne-mot de ladite partie protégée de la matrice mémoire et la copie inverse de ces données protégées dans le deuxième sous-ensemble de cellules mémoire de cette ligne-mot, le procédé comprenant la lecture simultanée de n'importe quel bit de données protégées dans le premier sous-ensemble de cellules mémoire de n'importe quelle ligne-mot de ladite partie protégée de la matrice mémoire et de la copie inverse de ce bit de données protégées qui se trouve dans le deuxième sous-ensemble de cellules mémoire de cette ligne-mot via respectivement deux dispositifs amplificateurs de détection (22, 24).
